# EUROPEAN PATENT APPLICATION

(11) **EP 2 800 238 A1**
(43) Date of publication of application: **05.11.2014**
(21) Application number: 12862778.3
(22) Date of filing: 28.11.2012
(51) Int. Cl.: H02J 13/00, H01R 13/66

(54) **POWER MANAGEMENT SYSTEM AND HIERARCHICAL POWER SWITCHES AND SOCKETS THEREOF**

(30) Priority: 28.12.2011 CN 201110446443; 13.08.2012 CN 201210285859
(71) Applicant: Hsieh, Homing, Taipei City 111 (TW)
(72) Inventor: LEUNG, Yuk-Ching, Taipei City 11141 Taiwan (TW); HSIEH, Homing, Taipei City 111 (TW)
(74) Representative: Chaillot, Geneviève
(86) International application number: PCT/CN2012/085384
(87) International publication number: WO 2013/097572

(57) **Abstract**

A power management system and hierarchical power switches and sockets thereof are mainly used to divide power source of one area into multiple ratings, and to layup supply lines and set the hierarchical power switches and the control switch based on this rating, thus to control the supply state of each service rating in the area by the using of the hierarchical power switches and the control switch, and then form hierarchical management mechanism to achieve the effect of the energy conservation, improve the security of the electric power system at the same time; The hierarchical power sockets are set on the ends of the supply lines, and the load device can be provided to select the connection the supply line in different service rating, achieving the energy conservation of hierarchical power management and the security of regional electricity supply.

## Description

### BACKGROUND OF THE INVENTION

### Field of Invention

The present invention relates to a power system, in particular to a power management system used to divide power source into multiple ratings, with hierarchical power switches and sockets to be applied in regional hierarchical management.

### Related Art

Along with the increasing scarcity of natural resources in the world, how to reduce energy consumption, has become a primary issue around the world. The goal of reducing consumption of resources has to be met under the premise of energy-saving. A number of load devices have been developed along with advances in technology, such as TV, video player, data processors, displays and a number of electrical appliances, etc. These different types of load devices are utilized in residential and commercial buildings and supplied from the electrical outlets. However, the load devices consume small amounts of electricity when not in use. Over the years, a lot of power resources are wasted. That does not conform to energy conservation and environmental protection requirements. Furthermore, while the load device is connected to the electric power system for a long time, it may be apt to cause fire risks to threat to property and human life.

The above-mentioned risks may be reduced by disconnecting the load devices and the electrical outlets. However, it is not convenient to take off the plug for non-using load devices (turn off the power switch). Also, the location of the electrical outlets may not be easy to reach to unplug. Therefore, it is not practicable. Furthermore, the conductive material of the plug and the socket usually is copper coated with zinc or tin to prevent oxidation. Although it can achieve the purpose of saving-energy by taking off the plug, this action would seriously cause the coated layer on the socket and plug wear resulting in increase of resistance and temperature. Inside the socket, the copper leads on both sides may become loose caused by repeat plug-unplug resulting in poor contact, causing sparks. Also, it is easy to accumulate in the dust collection outside the socket causing a short circuit. The method still has shortcomings. Therefore, an improved power system with energy conservation and the security of electricity supply is desired.

### SUMMARY OF THE INVENTION

The present invention provides a power management system and hierarchical power switches and sockets thereof to improve the security and stability of the electric power system, and to achieve the effect of the energy conservation.

In order to achieve the objectives mentioned above, there is provided in accordance with the present invention:
A power management system, comprising:
   at least one hierarchical power switch, dividing a power source of one area into a plurality of service ratings to control the power source;
   a plurality of supply lines, corresponding to the service ratings to transmit the power source; and
   a plurality of hierarchical sockets, connecting to the supply lines respectively, wherein the hierarchical sockets are provided to select by an user to supply a load device based on the service ratings.

The hierarchical power switch is controlled to open/close from a rear end.

The load device is AC-using (alternating current) load device.

At least one control switch is disposed between the hierarchical power switch and the hierarchical sockets.

A hierarchical socket, comprising:
a plurality of connecting portions, connecting to a plurality of supply lines to receive a plurality of power sources;
at least one switch element, connecting to the connecting portions, the switch element providing to select a service rating by an user to output the power source based on the selected service rating; and
at least one socket unit, connected to a load device and supplying the power source to the load device based on the selected service rating.

The hierarchical socket further comprises a signal transmit/receive module and a control module, the signal transmit/receive module adapted to receive a rear end control signal and connected to the control module, wherein the control module controls a supply state of the hierarchical socket.

The load device is AC-using (alternating current) load device.

A hierarchical socket, comprising:
a plurality of connecting portions, connecting to a plurality of supply lines to receive a plurality of power sources; and
at least one socket unit, connected to a load device and having a plurality of terminals adapted to supply the power sources to the load device.

The socket unit is connected to a extension module, the extension module comprising:
a multiple pin plug, connected to the socket unit to receive the power sources; and
at least one extension socket, adapted to connect to a load device and supply the power sources to the load device.

A hierarchical power switch, comprising:
a distribution module, adapted to divide an AC power source into a plurality of service ratings; and
at least one switch, connected to the distribution module to control the power source based on the service ratings.

The hierarchical power switch further comprises a signal transmit/receive module and a control module, the signal transmit/receive module adapted to receive a rear end control signal and connected to the control module, wherein the control module controls a supply state of the power switch.

The hierarchical power switch further comprises a protection module, adapted to cut off the power source based on the service ratings when the supply state is overload.

A power management system, comprising:
at least one hierarchical power switch, generating a control signal to control an area and divide a power source of the area into a plurality of service ratings to control the power source;
a plurality of supply lines, corresponding to the service ratings to transmit the power source; and
a plurality of hierarchical sockets, connecting to the supply lines respectively, comprising:
   at least one switch element, connecting to the supply lines and including a control module, the control module receiving the control signal to open/close the power source, the switch element providing to select a service rating by an user to output the power source based on the selected service rating; and
   at least one socket unit, connected to a load device and supplying the power source to the load device based on the selected service rating.

The hierarchical power switch is controlled to open/close from a rear end.

The invention divides power source of one area into multiple ratings, and to layup supply lines and set the hierarchical power switches and the control switch based on this rating, thus to control the supply state of each service rating in the area by the using of the hierarchical power switches and the control switch, and then form hierarchical management mechanism to achieve the effect of the energy conservation, improve the security of the electric power system at the same time. The hierarchical power sockets are set on the ends of the supply lines, and the load device can be provided to select the connection the supply line in different service rating to achieve the energy conservation of hierarchical power management.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given hereinbelow illustration only, and thus are not limitative of the present invention, and wherein:
FIG. 1 illustrates the first embodiment of the power management system according to the present invention.
FIG. 2A illustrates the first embodiment of the hierarchical power switch of the power management system according to the present invention.
FIG. 2B illustrates the second embodiment of the hierarchical power switch of the power management system according to the present invention.
FIG. 2C illustrates the third embodiment of the hierarchical power switch of the power management system according to the present invention.
FIG. 2D illustrates the fourth embodiment of the hierarchical power switch of the power management system according to the present invention.
FIG. 3A illustrates the first embodiment of the hierarchical socket of the power management system according to the present invention.
FIG. 3B illustrates the second embodiment of the hierarchical socket of the power management system according to the present invention.
FIG. 3C illustrates the third embodiment of the hierarchical socket of the power management system according to the present invention.
FIG. 3D illustrates the example of the distribution module of the power management system according to the present invention.
FIG. 4 illustrates the example of the control switch of the power management system according to the present invention.
FIG. 5A illustrates practice of the first embodiment of the power management system according to the present invention.
FIG. 5B illustrates the first embodiment of the extension module of the power management system according to the present invention.
FIG. 5C illustrates the second embodiment of the extension module of the power management system according to the present invention.
FIG. 5D illustrates the third embodiment of the extension module of the power management system according to the present invention.
FIG. 6 illustrates practice of the second embodiment of the power management system according to the present invention.
FIG. 7 illustrates the second embodiment of the power management system according to the present invention.
FIG. 8 illustrates the fifth embodiment of the hierarchical power switch of the power management system according to the present invention.
FIG. 9 illustrates the fourth embodiment of the hierarchical socket of the power management system according to the present invention.
FIG. 10 illustrates practice of the third embodiment of the power management system according to the present invention.

### DETAILED DESCRIPTION OF THE INVENTION

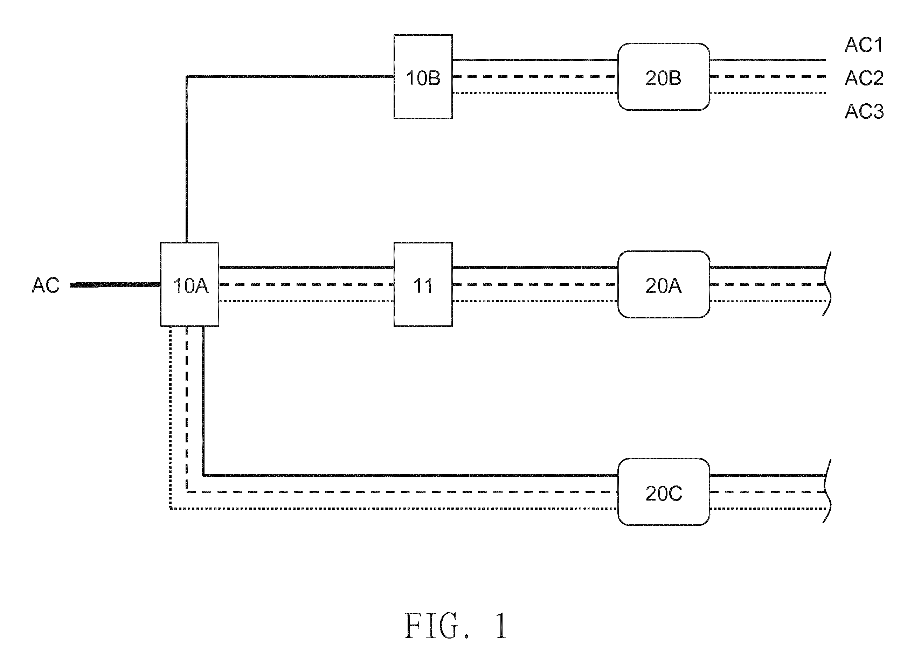

Please see FIG. 1, it illustrates the first embodiment of the power management system according to the present invention.

The power management system according to the invention, is mainly used to divide AC (alternating current) utility power source into multiple ratings. The power management system includes hierarchical power switches 10A, 10B, a control switch 11, and hierarchical power sockets 20A-20C. The hierarchical power switches 10A, 10B are used to divide AC (alternating current) utility power source into multiple service ratings. The supply lines AC1-AC3 are used to transmit the power source corresponding to the service ratings, or controlled by the control switch 11, to the hierarchical power sockets 20A-20C. The output power of the hierarchical power sockets 20A-20C may also be controlled based on the service rating. The hierarchical power sockets 20A-20C are provided to select one of the service ratings by an user and output the power based on the selected service rating to at least one load device. As shown in FIG. 1, there have three service rating, two hierarchical power switches 10A, 10B, and three hierarchical power sockets 20A-20C. The description proposed herein is just a preferable example for the purpose of illustrations only, not intended to limit the scope of the disclosure, so it should be understood that other equivalents and modifications could be made thereto without departing from the spirit and scope of the disclosure. The numbers of the service rating, the hierarchical power switches, and the hierarchical power sockets may be modified by the user to accomplish the power management system of this invention. The control switch 11 is provided to easily control the service ratings for the user.

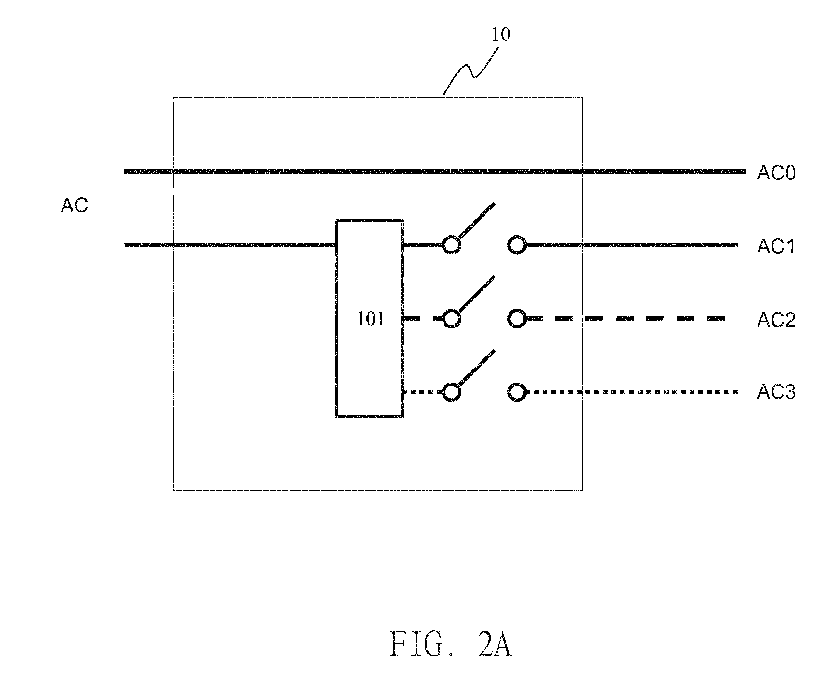

FIG. 2A illustrates the first embodiment of the hierarchical power switch of the power management system according to the present invention.

As shown in FIG. 2A, the hierarchical power switch 10 includes a distribution module 101. When the AC power source is inputted through two transmission lines, one transmission line may serve as a common line AC0 and another transmission line is connected to the distribution module 101. The distribution module 101 may divide the power source into multiple service rating power, as shown in FIG. 2A is three service ratings. At least one switch is connected to the distribution module 101 to control the power source based on the service ratings. The three service rating power are transmitted by the first supply line AC1, the second supply line AC2 and the third supply line AC3, to transmit the corresponding service rating power to the corresponding control switches and sockets.

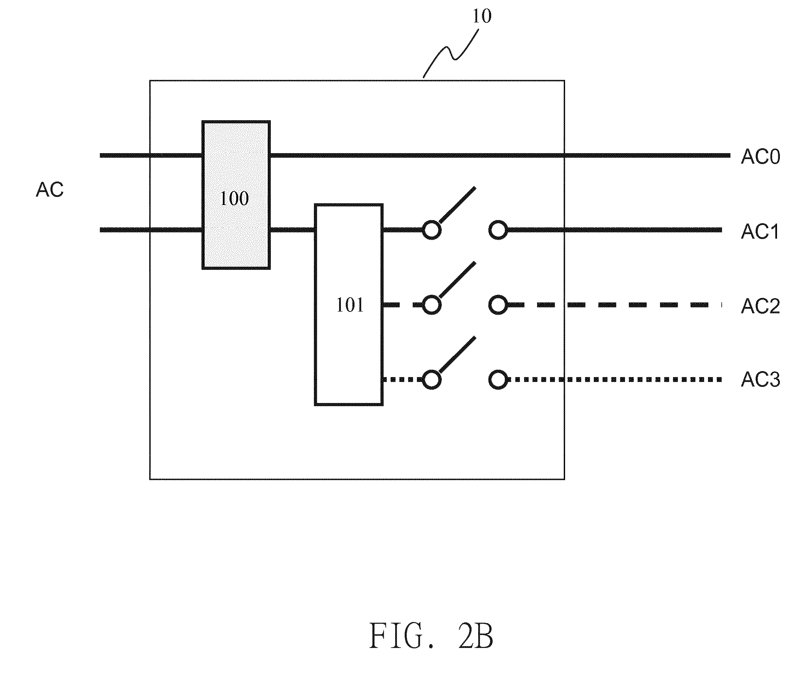

FIG. 2B illustrates the second embodiment of the hierarchical power switch of the power management system according to the present invention.

As shown in FIG. 2B, the hierarchical power switch 10 includes a protection module 100 and a distribution module 101. The protection module 100 is adapted to cut off the supplied power source when the power supply system is overload. When the AC power source is inputted through two transmission lines, one transmission line may serve as a common line AC0 and another transmission line is connected to the distribution module 101. The distribution module 101 may divide the power source into multiple service rating power, as shown in FIG. 2B is three service ratings. The three service rating power are transmitted by the first supply line AC1, the second supply line AC2 and the third supply line AC3, to transmit the corresponding service rating power to the corresponding control switches and sockets.

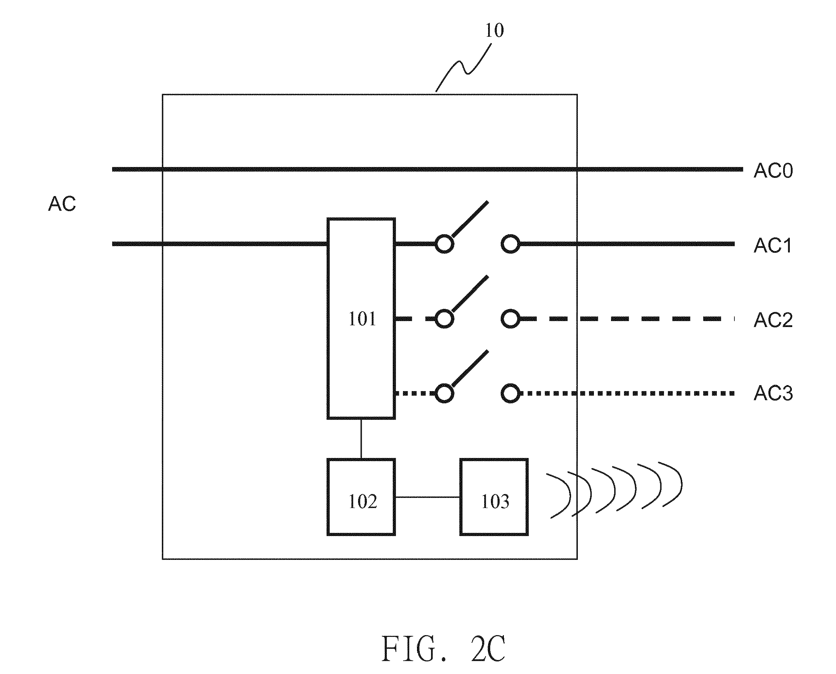

With the same spirit, the hierarchical power switch according to the present invention may have following embodiment. FIG. 2C illustrates the third embodiment of the hierarchical power switch of the power management system according to the present invention.

As shown in FIG. 2C, the hierarchical power switch 10 includes a protection module 100 and a distribution module 101. The hierarchical power switch 10 further includes a control module 102 and a signal transmit/receive module 103. The signal transmit/receive module 103 is used to receive a control signal and transmits the control signal to the control module 102 to control a supply state of the hierarchical power switch 10. The control signal may be wired or wireless transmitted from a rear end.

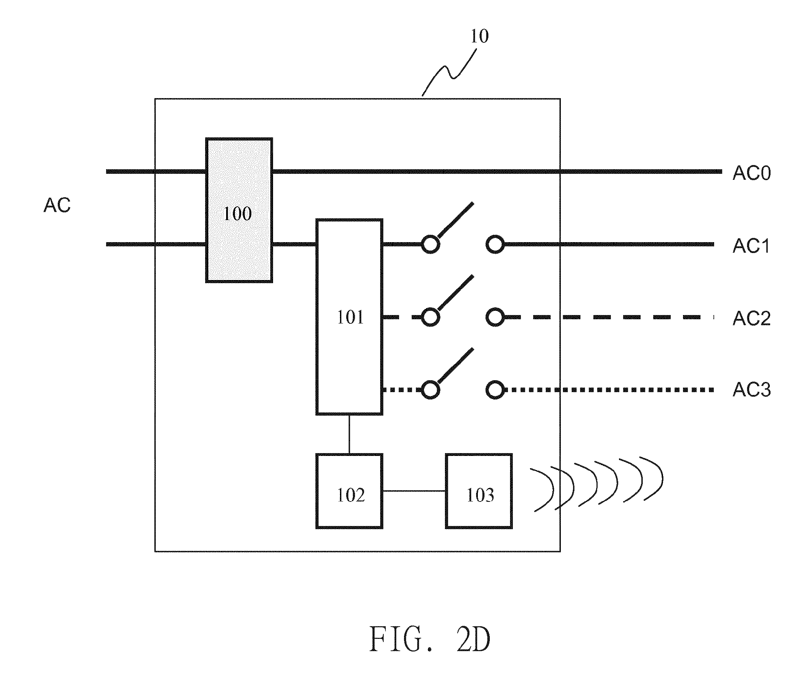

The above mentioned protection module 100, the distribution module 101, the control module 102 and a signal transmit/receive module 103 are modularized to add or replace easily in the power management system for users. FIG. 2D illustrates the fourth embodiment of the hierarchical power switch of the power management system according to the present invention.

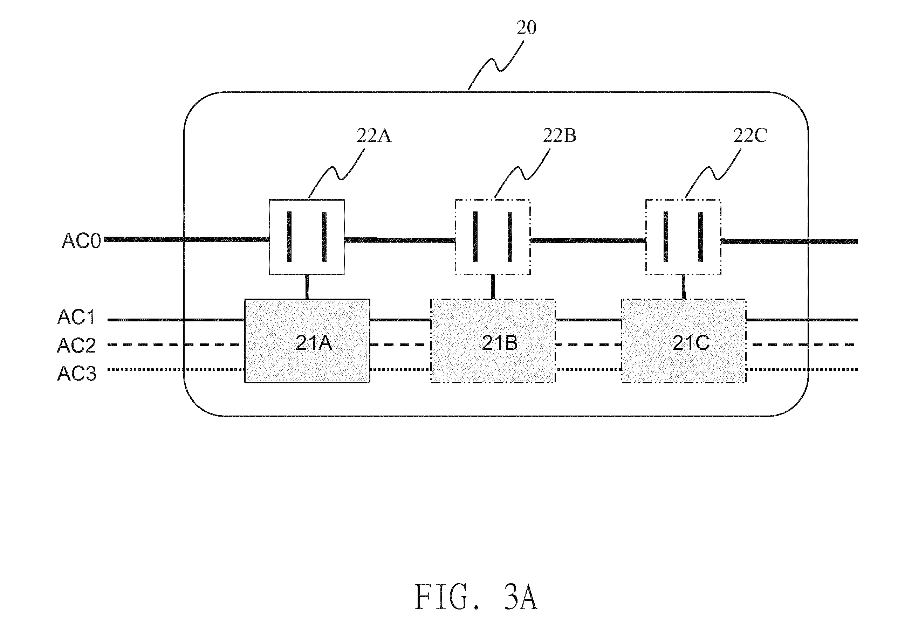

FIG. 3A illustrates the first embodiment of the hierarchical socket of the power management system according to the present invention.

As shown in FIG. 3A, the hierarchical socket 20 includes at least one switch elements 21A-21C and at least one socket units 22A-22C. AS shown, there have three switch elements and three socket units in this embodiment. The switch elements 21A-21C have multiple input and output terminals to connect the supply lines AC1-AC3 with different service ratings. The socket units 22A-22C are plug-able for the load device and receive the power source from the supply lines AC1-AC3 to supply the load device. The first supply line AC1, the second supply line AC2 and the third supply line AC3 transmit the corresponding service rating power to the switch elements 21A-21C. The switch elements 21A-21C provide to select the service ratings by users to output the power source based on the selected service rating to the socket units 22A-22C. As shown in FIG. 3A, each switch elements 21A-21C connects to one corresponding socket units 22A-22C respectively. All the socket units 22A-22C are connected to the common line AC0, and the outputted power from the socket units 22A-22C depends on the switch elements 21A-21C. Therefore, the socket units 22A-22C of this invention can provide different power based on the selected service rating, which are different from the conventional socket unit.

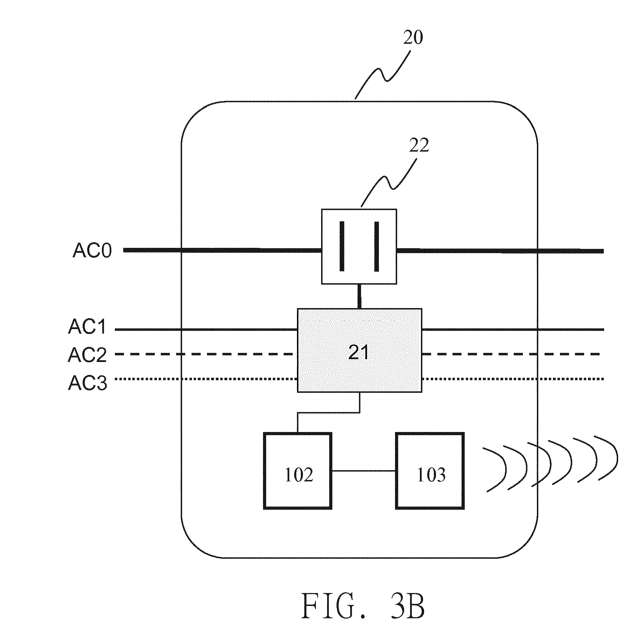

To make the power management system of the invention be more perfect, the power management system may further include a control module 102 and a signal transmit/receive module 103. The signal transmit/receive module 103 is used to receive a control signal and transmits the control signal to the control module 102 to control a supply state of the hierarchical power switch 10. The control signal may be wired or wireless transmitted from a rear end. For example, when an user approaches the power management system of the invention, the carried controller will emit a control signal to activate a specific service rating power in this area to supply power. When the user leaves this area, the hierarchical socket 20 is closed due to the interruption of the control signal. Therefore, a non-manual power control mechanism is formed. The above mentioned embodiment is shown in FIG. 3B, which illustrates the second embodiment of the hierarchical socket of the power management system according to the present invention.

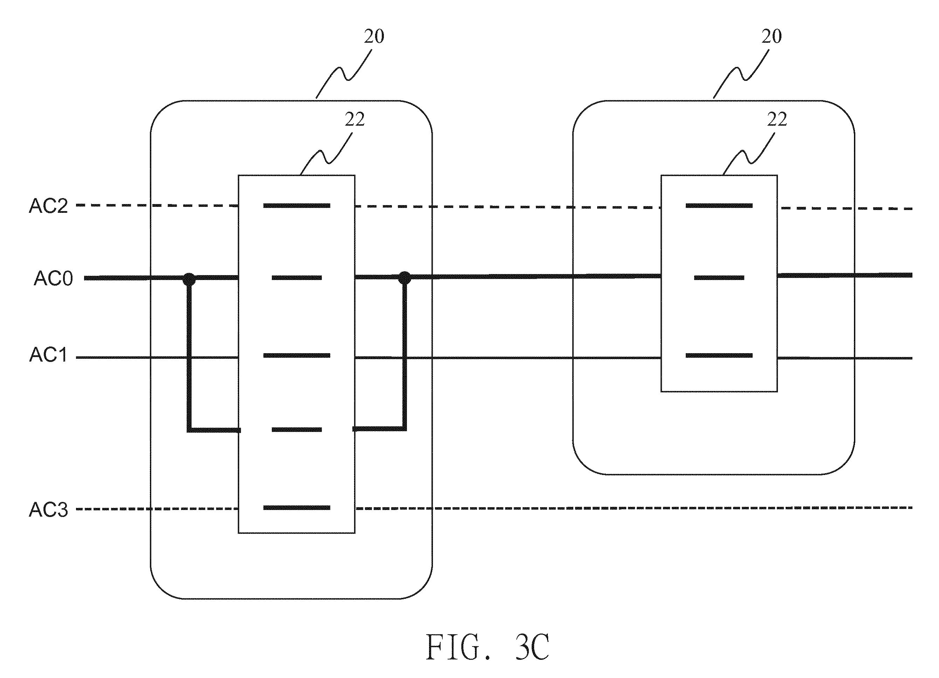

Except to the two above-mentioned embodiments, the invention provides a simplified hierarchical socket of the power management system, which is easier to produce and use. FIG. 3C illustrates the third embodiment of the hierarchical socket of the power management system according to the present invention.

As shown in FIG. 3C, the hierarchical socket 20 includes at least one socket unit 22. As shown, there are two socket units 22. The left socket unit 22 provides three service ratings supply lines, and the right socket unit 22 provides two service ratings supply lines. The socket unit 22 may connect to different service ratings supply lines to form a combo socket structure. The different load devices may acquire different service ratings power source, depended on the plugged locations by users. When the first supply line AC1 and the second supply line AC2 provide different service ratings power through the socket unit 22, the user may select different service ratings power by the socket unit 22. For example, when the plug of the load device is plugged into upper portion, the load device is connected to the common line AC0 and the second supply line AC2. When the plug of the load device is plugged into middle portion, the load device is connected to the common line AC0 and the first supply line AC1. When the plug of the load device is plugged into lower portion, the load device is connected to the common line AC0 and the third supply line AC3. To ensure all the supply lines AC1-AC3 may form a loop, the common line AC0 is bypassed inside the hierarchical socket 20. The selected service ratings power source is depended on the plugged locations by users. Therefore, in this embodiment, the switch element is omitted to reduce the cost and failure. Also, this socket can provide to select by users the supply power in different service rating, which is different from the conventional sockets.

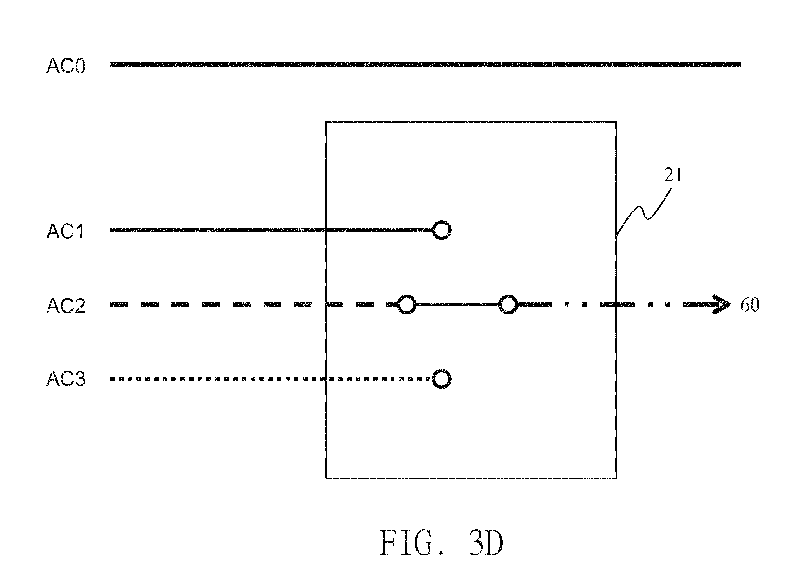

The switch element 21 may provide the users to elect the supply power in different service rating. Due to the fact that many devices may be installed without using power sockets, the switch element 21 may be embedded in the wall as a wallplate to control the supply power in different service rating directly. The above mentioned embodiment is shown in FIG. 3D, which illustrates the example of the distribution module of the power management system according to the present invention.

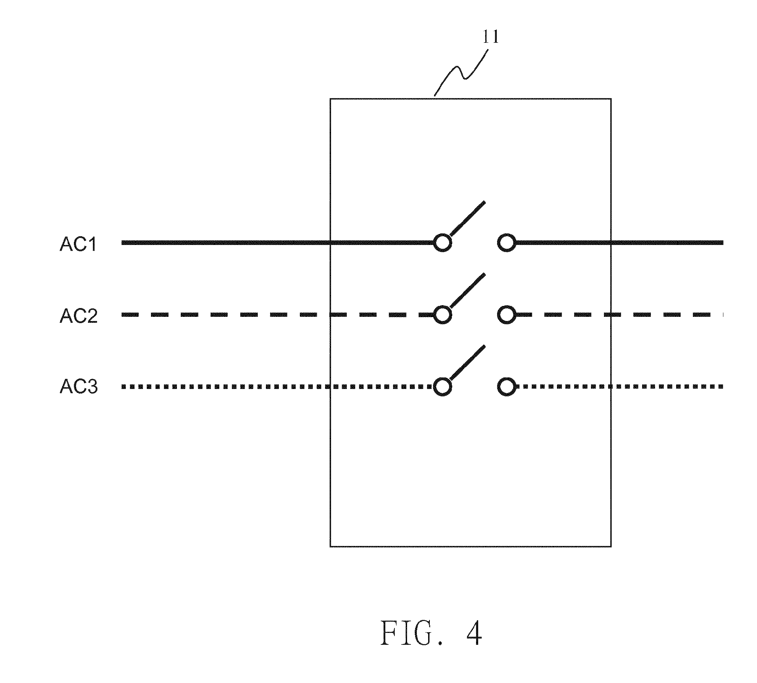

The control switch 11 shown in FIG. 1 may be disposed on any locations which is easy to use for users. The control switch 11 includes multiple switches corresponding to each service ratings. As shown in FIG. 4, which illustrates the example of the control switch of the power management system according to the present invention.

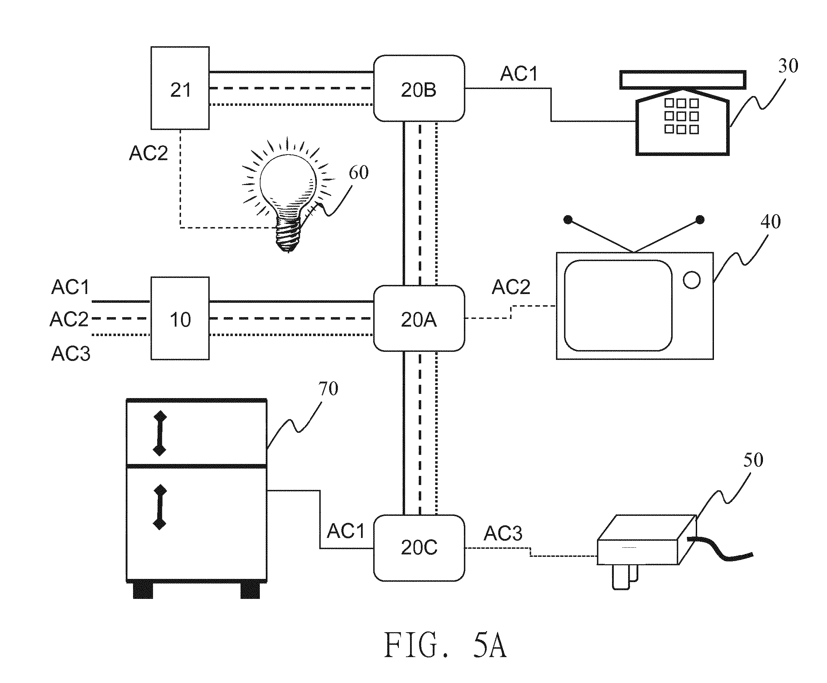

FIG. 5A illustrates practice of the first embodiment of the power management system according to the present invention.

The common line AC0 is the basic element to form the loop power system. Therefore, the following description and drawings does not repeat to describe. AS shown, there have three supply lines AC1-AC3, a control switch 11 and three hierarchical power sockets 20A-20C in this embodiment. For example, three supply power in different service rating are provided, which supply to the control switch 11through the first supply line AC1, high level, the second supply line AC2, median level, and the third supply line AC3, low level. Then the three supply power in different service rating are transmitted to the power sockets 20A-20C. When the load device is connected to the power sockets 20A-20C by users, one of the supply lines AC1-AC3 is set to be used based on the power consumption characteristics and the using frequency.

In this embodiment, the power socket 20A is connected to the communication device 30, such as a local phone. The power socket 20B is connected to the multimedia device 40, such as a TV device. The power socket 20C is connected to the rectification device 50, such as a transformer. The communication device 30 is an important device to contact in one area, which may include a local phone, a facsimile machine, or a recorder, etc. Therefore, the power socket 20A may be set in high level and be supplied by the first supply line AC1. The multimedia device 40 may include TV devices, media players or etc. The user may usually use the device. Therefore, the power socket 20B may be set in median level and be supplied by the second supply line AC2. The rectification device 50 may include a transformer, a charger, and etc. The user uses these devices only when the corresponding equipment has to be charged. However, the user usually let the rectification device 50 to plug into the socket. Therefore, the power socket 20C may be set in low level and be supplied by the second supply line AC3.

As shown in FIG. 5A, the power socket 20A is also connected to the light device 60, such as room lights. The the power socket 20B is also connected to the refrigerator 70. The light device 60 includes various kinds of lights inside the house, and have to be usually operated when the user stays in house. Therefore, it has to be set in median level. If it has been considered convenient to operate for user, the light device 60 is controlled by a single switch element 21. The switch element 21 is embedded in the wall as a wallplate. The user may uses the switch element 21 to select and set the different service ratings power to supply the light device 60. For example, the ceiling lamp for illumination may be set in median level due to usually use. The halogen lamp for ambiance may be set in low level due to less use.

The refrigerator 70 is used to to supply cold air to keep food fresh. It has to be set in high level. The hierarchical power sockets of the invention may be used to manage power system. The socket connected to the light device 60 is set to be supplied through the second supply line AC2. The power socket 20C may provide both high level power through the first supply line AC1 and median level power through the second supply line AC2 to supply the corresponding load devices. The socket connected to the refrigerator 70 is set to be supplied through the first supply line AC1. The power socket 20C may provide both high level power through the first supply line AC1 and low level power through the third supply line AC3 to supply the corresponding load devices.

The user may control the supply state of each service rating in the area by using of the control switch 11. For example, the first supply line AC1, high level, is set to continuous supply. Therefore, when the user leaves this area, the communication device 30 and the refrigerator 70 can still work. The second supply line AC1 is median level. When the user enters this area, the second supply line AC1 is opened to supply power. The multimedia device 40 and the light device 60 are used only when the user is at this area. Therefore, when the user leaves this area, the second supply line AC2, median level, is closed to cut off supply power by the control switch 11. All power sockets connected to the second supply line AC2 stop supplying power in this area. The rectification device 50 connected to the third supply line AC3, low level, is rarely used. So, the third supply line AC3 is set to turn off. The user may turn on when needed by the control switch 11 to save energy.

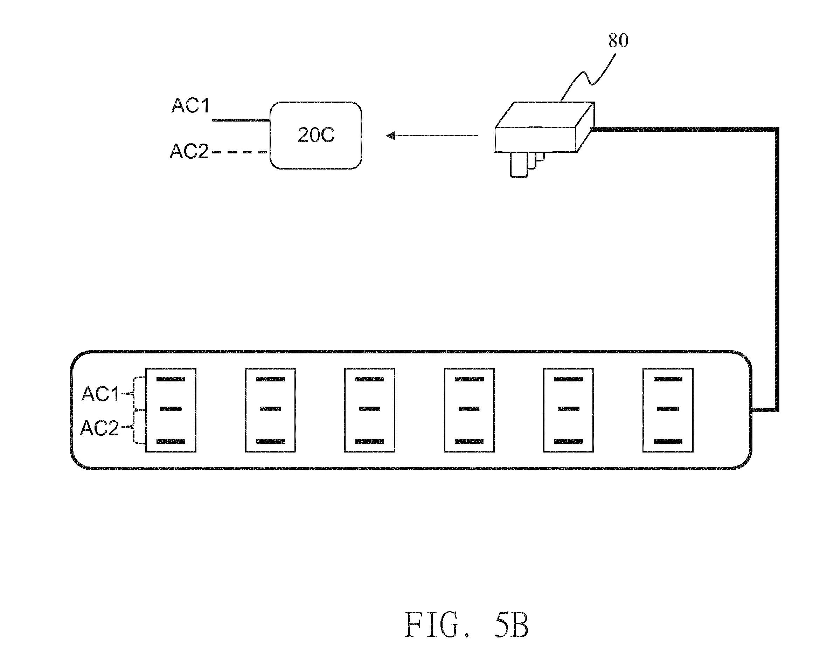

FIG. 5B illustrates the first embodiment of the extension module of the power management system according to the present invention.

If the position of the power socket 20C is not well to be used, the extension module 80 would be used to supply and manage power. The power socket 20C is shown in FIG. 3C. The plug of the extension module 80 is plugged into the power socket 20C. Therefore, the power with different service ratings may be used through the extension module 80. The extension module 80 includes a multiple pin plug and at least one extension socket. The extension sockets provides to select different service rating power, which are different from the conventional extended line.

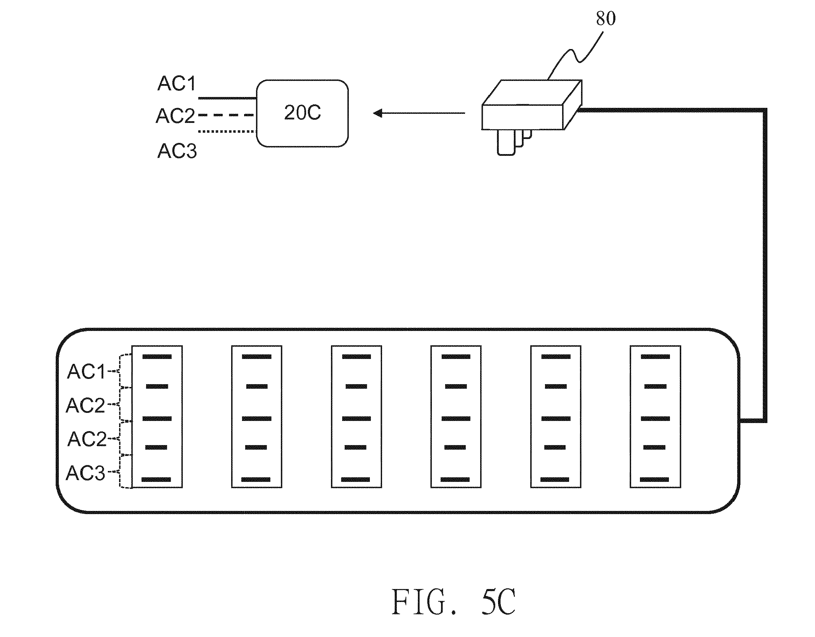

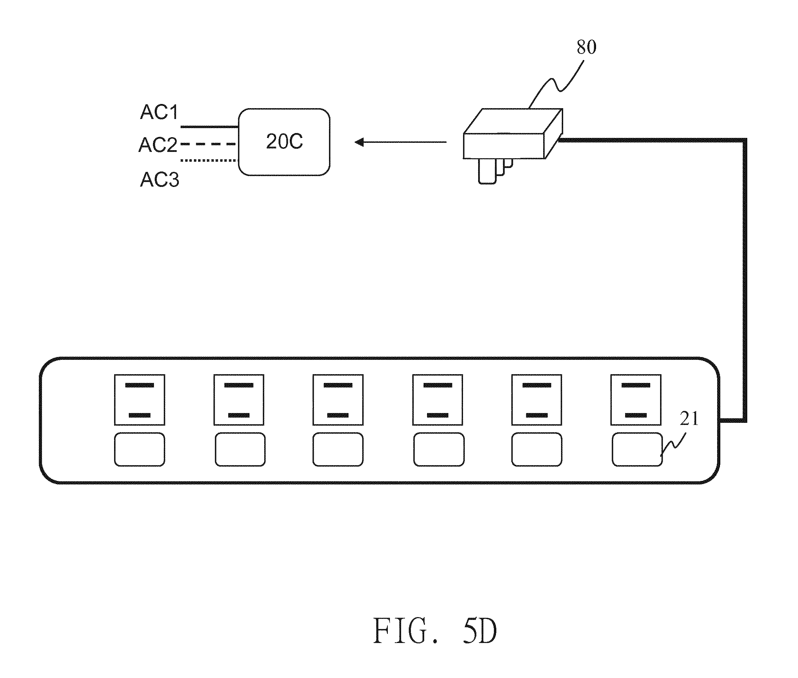

FIG. 5C illustrates the second embodiment of the extension module of the power management system according to the present invention. In this embodiment, the extension module 80 may provide more than two service rating power. On the other hand, the extension module 80 may include switch element 21 or the control module and the signal transmit/receive module to be used more easily. FIG. 5D illustrates the third embodiment of the extension module of the power management system according to the present invention.

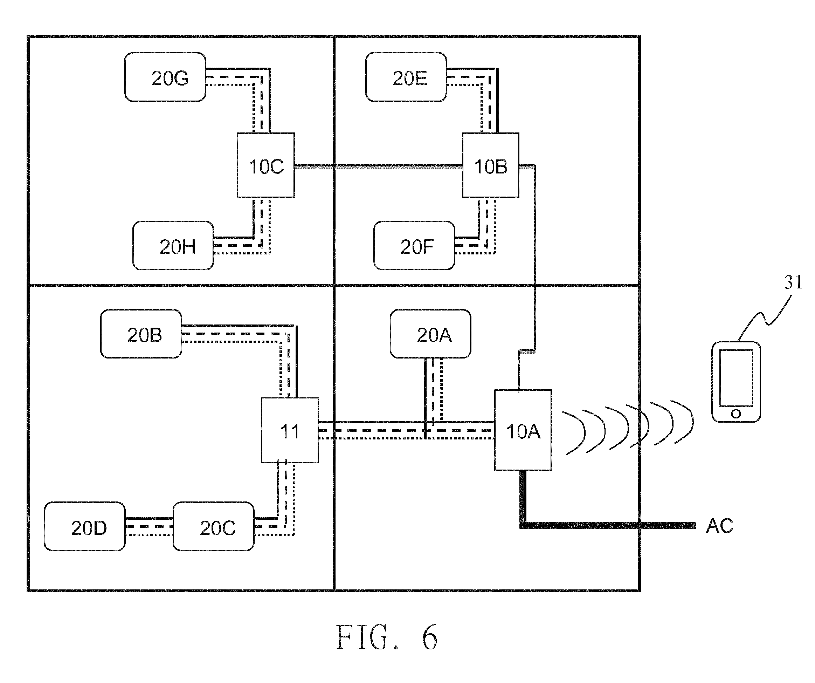

FIG. 6 illustrates practice of the second embodiment of the power management system according to the present invention.

In this embodiment, the power management system of the invention is applied in a house. The alternating current utility power AC is transmitted into the lower right area. The utility power AC is divided into multiple ratings through the hierarchical power switch 10A. As shown, the utility power AC is divided into three service ratings. Then, the service ratings power are supplied through the corresponding supply lines to form the basic structure of the power management system. The user may dispose the hierarchical power switches 10A-10C, the control switch 11, and the power sockets 20A-20H as needed to control the load devices in the house for every areas. For example, in the lower right area, the hierarchical power switch 10A is connected to the power socket 20A. The power socket 20A is used to be connected to an uninterruptible power supply (UPS), which needs to be continuously supplied. The control switch 11 controls the supply state in the lower left area. The power socket 20B is used to be connected to the light device of this area. Therefore, the power socket 20B may be set in high level. The other power sockets 20C, 20D are provided to the user to set the level as needed. The hierarchical power switch 10B controls the supply state in the upper right area. Excepting to control the power sockets 20E, 20F, the hierarchical power switch 10B may also control the hierarchical power switch 10C in the upper left area. The hierarchical power switch 10C is used to control the power sockets 20G, 20H. Therefore, the tree management structure of the power system is formed in the house.

Except for the above mentioned structure, the hierarchical power switch 10A may further include a control element and a transmit/receive element to receive the control signal to control the supply state from the wireless communication device 31 by the user outside this area, or through the network, or the power line. For example, the rolling door of the house may connect to the median level service rating power. When the user leaves the house, the median level service rating power is cut off. The other one cannot burst into the house. When the user come back, the median level service rating power is turned on through the rear end control. Then, the rolling door would be operated to open. Therefore, the security of residence and the protection of life and property of the user are enhanced.

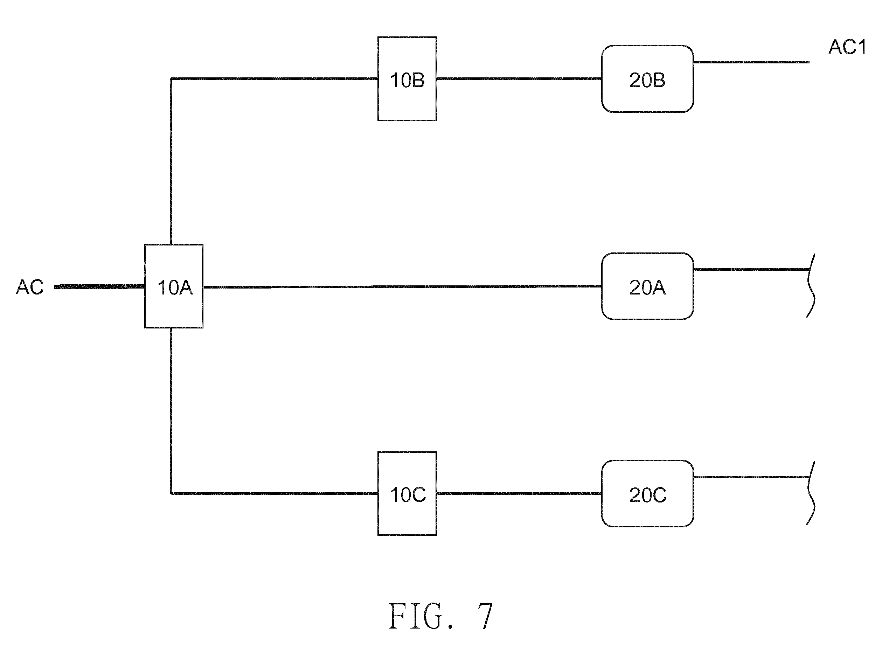

FIG. 7 illustrates the second embodiment of the power management system according to the present invention.

The power management system of the invention divides the alternating current utility power AC into multiple ratings. The power management system includes the hierarchical power switches 10A-10C and the power sockets 20A-20C. The hierarchical power switches 10A-10C may transmit several control signals with service ratings according to the user's control to the power sockets 20A-20C. The output power of the power sockets 20A-20C is controlled based on the service ratings. The power sockets 20A-20C divide the utility power AC into multiple ratings to be provided for the user to select. Then, the power sockets 20A-20C would output the selected service rating power to supply the load device. As shown, there are three hierarchical power switches 10A-10C and three power sockets 20A-20C. The description proposed herein is just a preferable example for the purpose of illustrations only, not intended to limit the scope of the disclosure, so it should be understood that other equivalents and modifications could be made thereto without departing from the spirit and scope of the disclosure. The numbers of the service rating, and the power sockets may be modified by the user to accomplish the power management system of this invention.

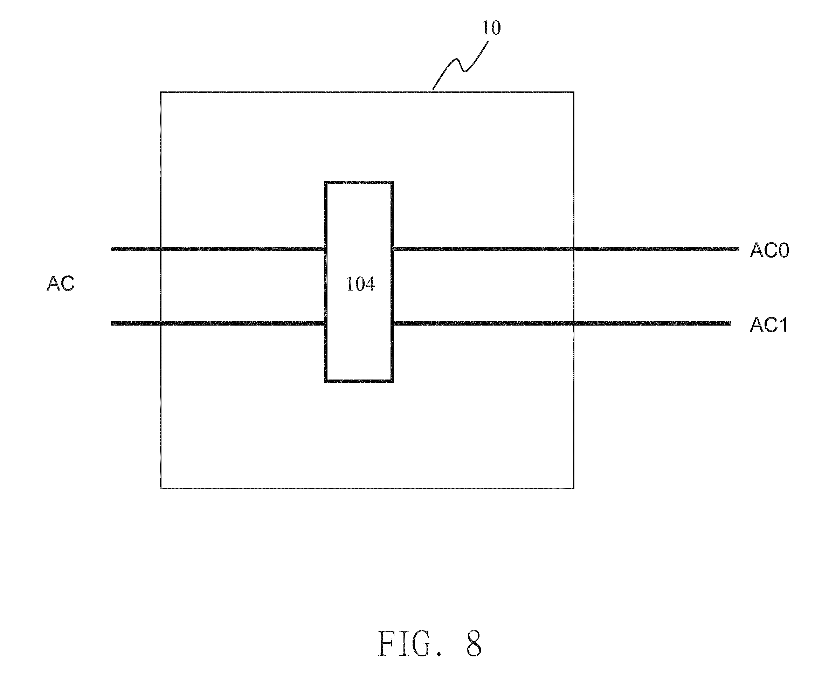

FIG. 8 illustrates the fifth embodiment of the hierarchical power switch of the power management system according to the present invention.

As shown, the hierarchical power switch 10 includes a transmit module 104. The alternating current utility power AC is transmitted through two supply lines. One of the supply line may serve as the common line AC0 for the different service ratings. Another supply line AC1 may form a loop with the common line AC0. The transmit module 104 is connected to both supply lines and connected to the following power sockets. The transmit module 104 may transmit the different service rating control signal according to the user's need to control the power sockets.

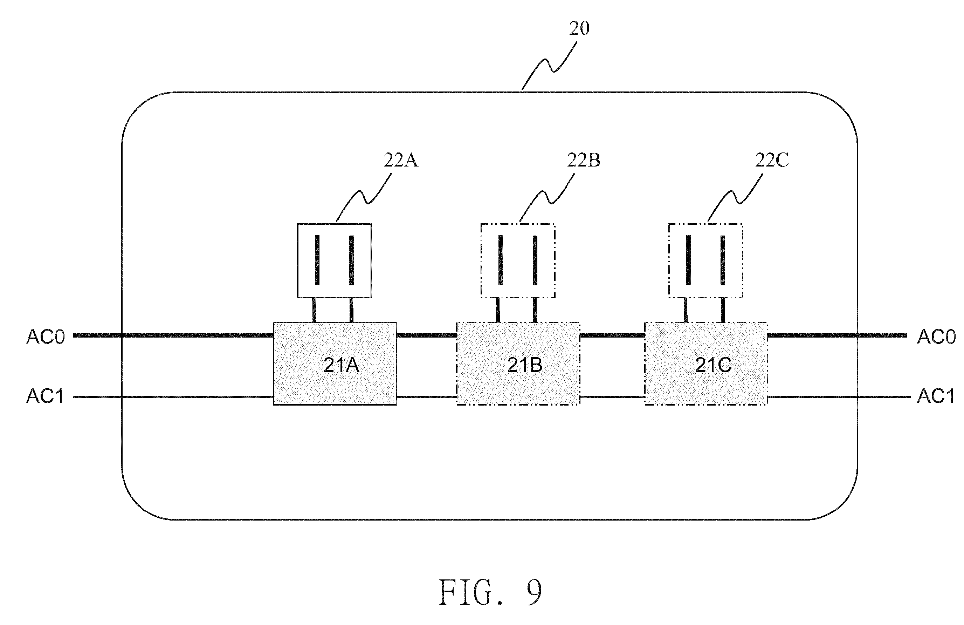

FIG. 9 illustrates the fourth embodiment of the hierarchical socket of the power management system according to the present invention.

As shown, the hierarchical power switch 10 includes a distribution module 101, a control module 102, at least one switch elements 21A-21C, and at least one socket units 22A-22C. The alternating current utility power AC is transmitted through two supply lines to the switch elements 21A-21C. The switch elements 21A-21C divide the utility power AC into multiple ratings to be provided for the user to select. The socket units 22A-22C are plug-able for the load device and receive the power source from the switch elements 21A-21C to supply the load device. The switch elements 21A-21C provide the multiple service ratings for the user to select and to supply power to the load device based on the select service rating from the socket units 22A-22C. As shown, each switch element corresponds to one socket unit. The supplied power from the socket unit is determined by the corresponding switch element. The switch elements 21A-21C include a control module to receive the control signal from the transmit module to control the outputted power of the socket units 22A-22C. Therefore, the socket units 22A-22C of the power sockets provides to select different service rating power, which are different from the conventional power socket.

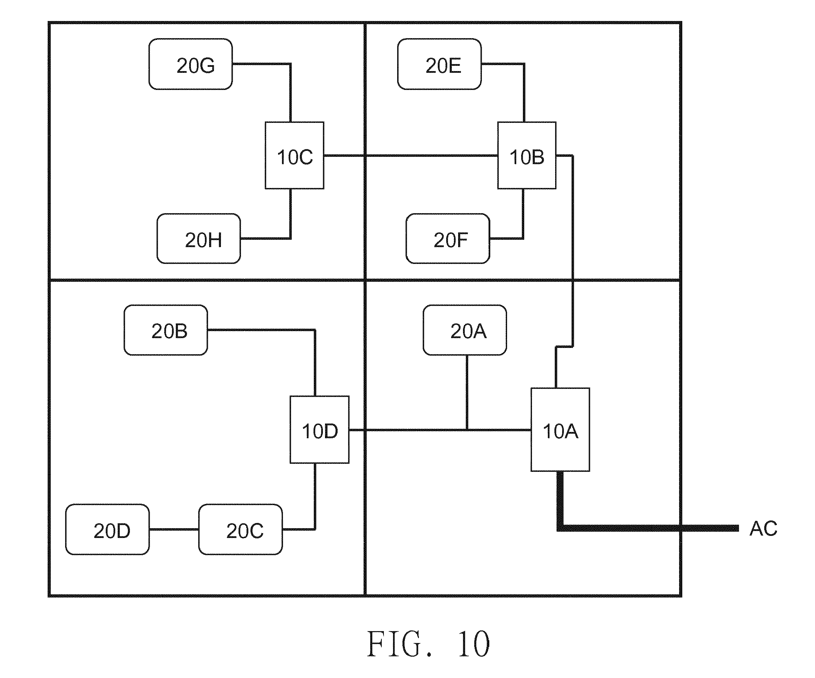

FIG. 10 illustrates practice of the third embodiment of the power management system according to the present invention. In this embodiment, the power management system of the invention is applied in a house. The alternating current utility power AC is transmitted into the lower right area. The utility power AC is divided into multiple ratings through the hierarchical power switch 10A. As shown, the utility power AC is divided into three service ratings. Then, the service ratings power are supplied through the corresponding supply lines to form the basic structure of the power management system. The user may dispose the hierarchical power switches 10A-10D, the control switch 11, and the power sockets 20A-20H as needed to control the load devices in the house for every areas. For example, in the lower right area, the hierarchical power switch 10A is connected to the power socket 20A. The power socket 20A is used to connect an uninterruptible power supply (UPS), which needs to be continuously supplied. The hierarchical power switch 10D controls the supply state in the lower left area. The power socket 20B is used to connect the light device of this area. Therefore, the power socket 20B may be set in high level. The other power sockets 20C, 20D are provided to the user to set the level as needed. The hierarchical power switch 10B controls the supply state in the upper right area. Excepting to control the power sockets 20E, 20F, the hierarchical power switch 10B may also control the hierarchical power switch 10C in the upper left area. The hierarchical power switch 10C is used to control the power sockets 20G, 20H. Therefore, the tree management structure of the power system is formed in the house.

When the user would like to turn off low level power in the upper left area, the user may operate the hierarchical power switch 10C only. The hierarchical power switch 10C will generate a control signal, turn off the low level power, to the supply line. When the power sockets 20G, 20H receive the control signal from the supply line, the low level power switches will be turned off to save energy. The shown structure is similar to the structure shown in FIG. 6. However, the hierarchical power switches 10A-10D only manage power without distributing. The power source distribution is performed by the power sockets 20A-20H. Therefore, the number of power lines may be reduced to achieve hierarchical power management.

The protection modules may be included in the hierarchical power switches, or the signal transmit/receive modules may be included in the hierarchical power sockets, to form a non-manual power control mechanism. These modules have been already represented in FIGS. 2B, 2D and 3B and explained using these figures, thus avoiding the need to repeat description.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A power management system, comprising:
at least one hierarchical power switch, dividing a power source of one area into a plurality of service ratings to control the power source;
a plurality of supply lines, corresponding to the service ratings to transmit the power source; and
a plurality of hierarchical sockets, connecting to the supply lines respectively, wherein the hierarchical sockets are provided to select by an user to supply a load device based on the service ratings.

2. The power management system of claim 1, wherein the hierarchical power switch is controlled to open/close from a rear end.

3. The power management system of claim 1, wherein the load device is AC-using (alternating current) load device.

4. The power management system of claim 1, further comprises at least one control switch disposed between the hierarchical power switch and the hierarchical sockets.

5. A hierarchical socket, comprising:
a plurality of connecting portions, connecting to a plurality of supply lines to receive a plurality of power sources;
at least one switch element, connecting to the connecting portions, the switch element providing to select a service rating by an user to output the power source based on the selected service rating; and
at least one socket unit, connected to a load device and supplying the power source to the load device based on the selected service rating.

6. The hierarchical socket of claim 5, further comprises a signal transmit/receive module and a control module, the signal transmit/receive module adapted to receive a rear end control signal and connected to the control module, wherein the control module controls a supply state of the hierarchical socket.

7. The hierarchical socket of claim 5, wherein the load device is AC-using (alternating current) load device.

8. A hierarchical socket, comprising:
a plurality of connecting portions, connecting to a plurality of supply lines to receive a plurality of power sources; and
at least one socket unit, connected to a load device and having a plurality of terminals adapted to supply the power sources to the load device.

9. The hierarchical socket of claim 8, wherein the socket unit is connected to a extension module, the extension module comprising:
a multiple pin plug, connected to the socket unit to receive the power sources; and
at least one extension socket, adapted to connect to a load device and supply the power sources to the load device.

10. A hierarchical power switch, comprising:
a distribution module, adapted to divide an AC power source into a plurality of service ratings; and
at least one switch, connected to the distribution module to control the power source based on the service ratings.

11. The hierarchical power switch of claim 10, further comprises a signal transmit/receive module and a control module, the signal transmit/receive module adapted to receive a rear end control signal and connected to the control module, wherein the control module controls a supply state of the power switch.

12. The hierarchical power switch of claim 11, further comprises a protection module, adapted to cut off the power source based on the service ratings when the supply state is overload.

13. A power management system, comprising:
at least one hierarchical power switch, generating a control signal to control an area and divide a power source of the area into a plurality of service ratings to control the power source;
a plurality of supply lines, corresponding to the service ratings to transmit the power source; and
a plurality of hierarchical sockets, connecting to the supply lines respectively, comprising:
at least one switch element, connecting to the supply lines and including a control module, the control module receiving the control signal to open/close the power source, the switch element providing to select a service rating by an user to output the power source based on the selected service rating; and
at least one socket unit, connected to a load device and supplying the power source to the load device based on the selected service rating.

14. The power management system of claim 13, wherein the hierarchical power switch is controlled to open/close from a rear end.
